# EUROPEAN PATENT SPECIFICATION

(11) **EP 1 486 546 B1**
(45) Date of publication and mention of the grant of the patent: **27.09.2006**
(21) Application number: 04253442.0
(22) Date of filing: 10.06.2004
(51) Int. Cl.: C09D 133/00, C09D 123/00

(54) **Water-based coating composition and multi-layer coating film-forming method**
Wässrige Beschichtungszusammensetzung und Verfahren zur Bildung eines mehrschichtigen Films
Composition de revêtement à base aqueuse et procédé de formation d'un film multicouche

(30) Priority: 10.06.2003 JP 2003164751; 04.06.2004 JP 2004167523
(43) Date of publication of application: 15.12.2004
(73) Proprietor: Kansai Paint Co., Ltd, Amagasaki-shi, Hyogo-ken 661-0964 (JP); Mitsui Chemicals, Inc., Tokyo 105-7117 (JP)
(72) Inventor: Katsuta, Hideaki c/o Kansai Paint Co., Ltd., Hiratsuka-shi, Kanagawa-ken 254-0016 (JP); Sato, Shingo c/o Kansai Paint Co., Ltd., Hiratsuka-shi, Kanagawa-ken 254-0016 (JP); Sugai, Hideo c/o Kansai Paint Co., Ltd., Hiratsuka-shi, Kanagawa-ken 254-0016 (JP); Nakano, Makoto c/o Mitsui Chemicals Inc., Sodegaura-shi, Chiba-ken 299-0265 (JP); Kan, Kojiro c/o Mitsui Chemicals Inc., Sodegaura-shi, Chiba-ken 299-0265 (JP); Doki, Hirotoshi, c/o Mitsui Chemicals Inc., Minato-ku, Tokyo 105-7177 (JP)
(74) Representative: Stuart, Ian Alexander

(56) References cited:
- DE-C- 3 645 347
- US-B1- 6 376 589

## Description

The present invention relates to a water based coating composition for use on an automobile body external panel; and to a multi-layer coating film-forming method using the water based coating composition. Preferred embodiments and products are capable of recycling due to being halogen-free, and capable of reducing loadings to environment due to shortening of steps without a step of coating an anti-chipping primer with the result that the multi-layer coating film formed therefrom shows good properties in anti-chipping properties and finish properties.

### Description of Background Art:

In the art, the automobile body external panel is usually coated with a multi-layer coating film formed from a primer coating composition by use of a cationic electrodeposition coating composition, an anti-chipping primer, an intercoat coating composition and a topcoat coating composition for the purpose of imparting anti-corrosive properties and beautiful appearance.

However, the above multi-layer coating film produces drawbacks such that collision of pebbles, gravels, antifreezing agent, lumps of ice, etc. jumped up from on the road while the automobile is running against to the automobile body external panel may produce mars on the multi-layer coating film, to be extreme, local breakings and falling off of the multi-layer coating film, poor coating film appearance, and exposure of the metal substrate, resulting in developing rust and corrosion (the above phenomena may be referred to as "chipping").

An organic solvent-based coating composition has been mainly used in the art. Recently, however, from concerns of influence on health and environment, development of a water-based coating composition for use in an automobile, which is capable of solving the problems such as reduction in volatile organic compound content, recycling due to being halogen-free, reduction in energy due to shortening of steps and the like, and has anti-chipping properties, has been demanded.

In the art, Japanese Patent Application Laid-Open No. 24580/97 discloses, as an anti-chipping primer in place of a chlorinated polyethylene resin, an anti-chipping primer containing a modified polyester resin, epoxy resin, melamine resin and pigment (Reference 1).

Japanese Patent Application Laid-Open No. 33478/99 discloses an anti-chipping multi-layer coating film-forming method, which method comprises coating a chipping primer containing an alkenic acid monomer-containing ethylene copolymer water dispersion, a water based urethane resin and a water-miscible organic solvent or a melamine resin onto an electrodeposition coating film formed onto a coating substrate, followed by coating an intercoat coating composition comprising a melamine-curing polyester based aqueous coating composition, and heat curing both primer coating film and intercoat coating film simultaneously (Reference 2).

The inventions disclosed in Reference 1 and Reference 2 relate to a multi-layer coating film-forming method comprising coating a halogen-free anti-chipping primer, followed by coating a water based intercoat coating composition, and are such that a multi-layer coating film formed onto an automobile body external panel without coating the halogen-free anti-chipping primer can not show satisfactory anti-chipping properties.

Japanese Patent Application Laid-Open No. 281960/00 discloses a coating composition containing an emulsion prepared by dispersing a resin particle containing an olefin polymer and an acrylic polymer in the same particle (Reference 3). However, use of a water based coating composition simply containing the above emulsion and used in an automobile body external body makes it impossible to obtain a multi-layer coating film showing good properties in anti-chipping properties and finish properties with the result that improvements are demanded.

### Summary of the Invention:

It is an object of the present invention to provide a water based coating composition for use in an automobile body external panel and a multi-layer coating film-forming method by use of the water based coating composition, preferably (a) capable of recycling due to being halogen-free, (b) capable of reducing loadings to environment due to shortening of steps, and/or (c) capable of forming a multi-layer coating film showing good properties in anti-chipping properties and finish properties.

The present inventors made intensive studies and found that application of a water based coating composition containing a specified resin composition comprising (A) a resin particle containing an olefin polymer and an acrylic polymer in the same particle, (B) a hydroxyl group-containing resin (B) and a curing agent (C) to coating onto the automobile body external panel makes it possible to form a multi-layer coating film capable of recycling and reducing loadings to environment, and showing good properties in anti-chipping properties and finish properties.

That is, the present invention provides a coating composition suitable for use on an automobile body external panel, containing, as essential components, (A) a resin particle containing an olefin polymer and an acrylic polymer in the same particle, (B) a hydroxyl group-containing resin, (C) a curing agent, and (D) a pigment. The mixing amount of the resin particle (A) is in the range of 20 to 80 parts by weight per 100 parts by weight of a total solid content of the resin particle (A), the hydroxyl group-containing resin and the curing agent (C). The weight ratio of the olefin polymer to the acrylic polymer is such that the olefin polymer is 95 to 10% by weight and the acrylic polymer is 5 to 90% by weight, and the mean particle size of the resin particle (A) is 10 nm to 500 µm. In another aspect the invention provides a multi-layer coating film-forming method, which method comprises the following successive steps,
step 1 of coating a water based coating composition as claimed in any one of claims 1 to 5 without coating an anti-chipping primer onto a coating substrate consisting of a metal coating substrate or an electrodeposition coating-treated metal coating substrate, followed by heat curing to form a cured coating film or forming an uncured coating film as it is,
step 2 of coating a topcoat coating composition by at least one layer onto a coating film formed in step 1 to form a topcoat coating film, and
step 3 of heat curing at least one uncured coating film formed in steps 1 and 2 at 60-180°C for 10-90 minutes.

The present invention further relates to the above multi-layer coating film-forming method, wherein the coating substrate is a composite member of an electrodeposition coating-treated metal member with a plastic member.

### Detailed Description of the Invention:

The water-based coating composition of the present invention is a water-based coating composition suitable for an automobile body external panel, and containing, as essential components, (A) a resin particle containing an olefin polymer and an acrylic polymer in the same particle, (B) a hydroxyl group-containing resin, (C) a curing agent and (D) a pigment. The resin particle (A) containing the olefin polymer and the acrylic polymer in the same particle (hereinafter may be referred to as "the resin particle (A)") is explained hereinafter.

An olefin monomer used in the resin particle (A) containing the olefin polymer and the acrylic polymer in the same particle is not particularly limited, but may include, for example, α-olefin such as ethylene, propylene, 1-butene, 3-methyl-1-butene, 4-methyl-1-pentene, 3-methyl-1-pentene, 1-heptene, 1-hexene, 1-decene, 1-dodecene and the like; a conjugated diene and non-conjugated diene such as butadiene, ethylidene-norbornene, dicyclopentadiene, 1,5-hexadiene and the like; and the like. These may be used alone or in combination.

A monomer other than the olefin monomer used in polymerization in the preparation of the olefin polymer may include any monomer copolymerizable with the olefin monomer without particular limitations, for example, vinyl acetate vinyl alcohol and the like. These monomers may be used alone or in combination.

Specific examples of the olefin polymer may include, for example, a homopolymer, randum copolymer or block copolymer of α-olefin such as ethylene, propylene, 1-butene, 3-methyl-1-butene, 4-methyl-1-pentene, 3-methyl-1-pentene, 1-heptene, 1-hexene, 1-decene, 1-dodecene and the like, for example, low density polyethylene, high density polyethylene, polypropylene, poly-1-butene, poly-3-methyl-1-butene, poly-4-methyl-1-pentene, poly-3-methyl-1-pentene, ethylene-propylene copolymer, ethylene-1-butene copolymer, propylene-1-butene copolymer and propylene-1-butene-ethylene copolymer; a copolymer of α-olefin with a diene such as a conjugated diene, non-conjugated diene and the like, for example, ethylene-butadiene copolymer and ethylene-ethylidene-norbornene; a terpolymer of at least two α-olefin with a conjugated diene or non-conjugated diene, for example, ethylene-propylene-butadiene terpolymer, ethylene-propylenedicyclopentadiene terpolymer, ethylene-propylene-ethylidene-norbornene terpolymer, ethylene-propylene-1,5-hexadiene terpolymer and the like; a copolymer of an olefin with other monomer, for example, ethylene-vinyl acetate copolymer, ethylene-vinyl alcohol copolymer and the like, and the like.

An acrylic monomer used in polymerization for the preparation of the acrylic polymer is not particularly limited, and may include, for example, (meth)acrylic esters, particularly C₁₋₁₂ alkyl esters such as methyl acrylate, ethyl acrylate, n-butyl acrylate, i-butyl acrylate, 2-ethylhexyl acrylate, lauryl acrylate and the like; aromatic monomer such as styrene, α-methyl styrene and the like; polar group-containing monomer, for example, hydroxyl group-containing hydroxylalkyl acrylates such as hydroxyethyl acrylate, hydroxypropyl acrylate, hydroxyethyl methacrylate, hydroxypropyl methacrylate and the like; respectively carboxyl group-containing acrylic acid, methacrylic acid, crotonic acid, itaconic acid, fumaric acid, maleic acid and the like; other polar group-containing monomer such as acrylonitrile, methacrylonitrile, acrylamide, methacrylamide, glycidyl methacrylate and the like. These may be used alone or in combination.

In the case where the carboxyl group-containing monomer is used as the acrylic monomer, the carboxy group-containing monomer may be used in an amount of 5% by weight or less, preferably less than 3% by weight, more preferably none based on 100% by weight of a total amount of the acrylic monomer. An amount of more than 5% by weight of the carboxyl group-containing monomer may make it difficult to form the acrylic polymer within an olefin polymer particle.

A weight ratio of the olefin polymer to the acrylic polymer is such that the olefin polymer is 95 to 10% by weight and the acrylic polymer is 5 to 90% by weight, preferably the olefin polymer is 95 to 30% by weight and the acrylic polymer is 5 to 70% by weight, more preferably the olefin polymer is 95 to 40% by weight and the acrylic polymer is 5 to 60% by weight based on a total weight of the olefin polymer and the acrylic polymer.

An acrylic polymer less than 5% by weight can not develop features of the acrylic polymer, for example, may reduce adhesion properties to a non-polar substrate. To the contrary, an acrylic polymer more than 90% by weight can not develop features of the olefin polymer, for example, may reduce adhesion properties to a polar substrate.

The resin particle (A) contains the olefin polymer and the acrylic polymer in the same particle, and a structure of the resin particle (A) is not particularly limited and may include, for example, a core/shell structure, composite structure, localized structure, potbelly-shaped structure, octopus-shaped structure, raspberry-shaped structure, multi-particle composite structure and IPN structure. A mean particle size of the resin particle (A) is 10 nm to 500 µm, preferably 10 nm to 100 µm, more preferably 10 nm to 10 µm, most preferably 10 nm to 2 µm.

The resin particle (A) is prepared by subjecting the acrylic monomer to polymerization in the presence of an emulsion prepared by dispersing olefin polymer particles into water, wherein an acrylic polymer is formed within the olefin polymer particle.

A polymerization initiator used in the preparation of the acrylic polymer may include any ones used in emulsion polymerization, for example, hydrogen peroxide; persulfate such as ammonium persulfate, potassium persulfate, sodium persulfate and the like; organic peroxide such as cumene hydroperoxide, t-butyl hydroperoxide, benzoyl peroxide, t-butylperoxy-2-ethylhexanoate, t-butylperoxybenzoate, lauroyl peroxide and the like; azo compound such as azobisisobutylonitrile and the like; a redox initiator comprising a combination of the above initiators with a reducing agent, for example, a metal ion such as iron ion, sodium sulfoxylate, formaldehyde, sodium pyrosulfite, sodium bisulfite, L-ascorbic acid, Rongalite (sodium formaldehyde sulfoxylate) and the like, and the like. These may be used alone or in combination. Specific examples of a preferable initiator may include ones having a water solubility of 0 to 10%, preferably 0 to 5%, more preferably 0 to 3%.

Use of an initiator having a water solubility more than 10% makes difficult to form the acrylic polymer within the olefin polymer particle. The initiator is practically used in an amount of 0.1 to 5% by weight. Optionally, mercaptans such as t-dodecylmercaptan, n-dodecylmercaptan and the like, allyl compounds such as allyl sulfonic acid, methallylsulfonic acid, sodium salts thereof and the like, and the like may be used as a molecular weight controlling agent.

On polymerizing the acrylic monomer in the presence of the olefin emulsion, a surface active agent usually used in emulsion polymerization may be used for the purpose of improving stability of the resin particle.

The surface active agent may specifically include, for example, an anionic surface active agent, non-ionic surface active agent, cationic surface active agent, other reactive surface active agent and the like. These may be used alone or in combination. The non-ionic surface active agent may include, for example, polyoxyethylene lauryl ether, polyoxyethylene octyl phenyl ether, polyoxyethylene oleyl phenyl ether, polyoxyethylene nonyl phenyl ether, oxyethylene-oxypropylene block copolymer, tert-octylphenoxyethyl polyethoxyethanol, nonylphenoxyethyl polyethoxyethanol and the like.

The anionic surface active agent may include, for example, sodium dodecylbenzene sulfonate, sodium lauryl sulfate, sodium alkyldiphenyl ether disulfonate, sodium alkylnaphthalene sulfonate, sodium dialkylsulfosuccinate, sodium stearate, potassium oleate, sodium dioctyl sulfosuccinate, sodium polyoxyethylene alkyl ethyl ether sulfate, sodium polyoxyethylene alkyl phenyl ether sulfate, sodium oleate, sodium tert-octylphenoxyethoxypolyethoxyethyl sulfate salt, and the like.

The cationic surface active agent may include, for example, lauryl trimethyl ammonium chloride, stearyl trimethyl ammonium chloride and the like.

An amount of the surface active agent may not particularly be limited. However, too much amount of the surface active agent may form a resin particle composed of acrylic polymer only, and may make it difficult to form acrylic polymer within an olefin polymer particle. The surface active agent may usually be used in an amount of 0.02 to 5% by weight based on a total weight of the acrylic monomer. Respective monomers as above described may be added in the lump, by divided parts, or continuously dropping, and subjected to polymerization at 0 to 100°C, preferably 30 to 90°C in the presence of the polymerization initiator.

A mixing amount of the resin particle (A) in the automobile body external panel-used water based coating composition is 20 to 80 parts by weight, preferably 25 to 60 parts by weight, more preferably 30 to 50 parts by weight per 100 parts by weight of the resin particle (A), the hydroxyl group-containing resin (B) and the curing agent (C). The resin particle (A) in an amount less than 20 parts by weight may provide no effect on improving anti-chipping properties. On the other hand, when more than 80 parts by weight, finish properties and coating composition properties may become poor.

The hydroxyl group-containing resin (B) in the automobile body external panel-used water based coating composition may include at least one active hydrogencontaining compound, for example, ones selected from alcohols, amines, polyhydroxypolyesters, polylactones, hydroxypolycarbonates, polythioethers, polyacetals, polyether esters, polyester amides and polyamide-polyamine resin such as a product obtained from a dimerized aliphatic acid and aliphatic acid polyamide, and the active hydrogen atom-containing compound may preferably include a carboxyl group and hydroxyl group-containing acrylic resin, a water-dispersible polyester or polyether resin, polycarbonate resin, urethane resin, tertiary amine group-containing hydroxyacrylic resin, and oligomers thereof. Of these, the water-dispersible polyester resin, the carboxyl group and hydroxyl group-containing acrylic resin and urethane-modified ones of these resins are preferable.

The hydroxyl group-containing polyester resin may be a hydroxyl group-containing polyester resin containing as essential components at least one polybasic acid selected from the group consisting of an alicyclic polybasic acid and other polybasic acid, and at least one polyhydric alcohol selected from the group consisting of an alicyclic polyhydric alcohol and other polyhydric alcohol, preferably a hydroxyl group-containing polyester resin containing as essential components an alicyclic polybasic acid and/or an alicyclic polyhydric alcohol, other polybasic acid and other polyhydric alcohol for the purpose of improving anti-chipping properties.

The alicyclic polybasic acid is a compound having at least one alicyclic structure mainly of 4 to 6 membered rings and at least two carboxyl groups in one molecule, and may include, for example, cyclohexane-1,3-dicarboxylic acid, cyclohexane-1,4-dicarboxylic acid, hexahydrophthalic acid, hexahydroisophthalic acid, hexahydroterephthalic acid, hexahydrotrimellitic acid, methylhexahydrophthalic acid, and anhydrides thereof.

The other polybasic acid is a compound having at least two carboxyl groups in one molecule, and may include, for example, phthalic acid, isophthalic acid, terephthalic acid, naphthalene dicarboxylic acid, 4,4-diphenyl dicarboxylic acid, diphenylmethane-4,4'-dicarboxylic acid, succinic acid, adipic acid, azelaic acid, sebacic acid, HET acid, maleic acid, fumaric acid, itaconic acid, trimellitic acid, pyromellitic acid, anhydrides thereof.

The alicyclic polyhydric alcohol is a compound having at least one alicyclic structure of mainly 4 to 6 membered rings and at least two hydroxyl groups in one molecule, and may include, for example, 1,3-cyclohexanedimethanol, 1,4-cyclohexanedimethanol, tricyclodecanedimethanol, hydrogenated bisphenol A, hydrogenated bisphenol F, spiroglycol, dihydroxymethyltricyclodecane and the like.

Of the other polyhydric alcohol, a polyhydric alcohol having two hydroxyl groups in one molecule may include, for example, glycols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1,4-pentanediol, 2,4-pentanediol, 2,3-dimethyltrimethylene glycol, tetramethylene glycol, 3-methyl-4,5-pentanediol, 2,2,4-trimethyl-1,3-pentanediol, 1,6-hexanediol, 1,5-hexanediol, 1,4-hexanediol, 2,5-hexanediol, neopentyl glycol, hydroxypivalic acid neopentyl glycol ester and the like; polylactonediol obtained by addition of lactones such as s-caprolactone and the like, polyester diols such as bis(hydroxyethyl) terephthalate and the like.

Of the other polyhydric alcohol, a polyhydric alcohol having at least three hydroxyl groups in one molecule may include, for example, glycerin, trimethylolpropane, trimethylolethane, diglycerin, triglycerin, 1,2,6-hexanetriol, pentaerythritol, dipentaerythritol, sorbitol, mannitol and the like.

A content of the alicyclic polybasic acid and/or the alicyclic polyhydric alcohol in the polyester resin is in the range of 20 to 70% by weight, preferably 30 to 60% by weight based on a total solid content of monomers constituting the polyester resin.

A content less than 20% by weight of the alicyclic polybasic acid and/or the alicyclic polyhydric alcohol is ineffective on improvement in anti-chipping properties. A content more than 70% by weight may reduce weather resistance.

The polyester resin obtained by reacting the alicyclic polybasic acid, other polybasic acid, the alicyclic polyhydric alcohol and other polyhydric alcohol has a weight average molecular weight in the range of 1,000 to 1000,000, preferably 2,000 to 10,000, a hydroxyl value in the range of 30 to 200 mgKOH/g, preferably 50 to 180 mgKOH/g, and an acid value in the range of 5 to 100 mgKOH/g, preferably 10 to 60 mgKOH/g.

The hydroxyl group-containing acrylic resin in the present invention may be prepared by copolymerizing a hydroxyl group-containing polymerizable monomer and an acrylic monomer-containing polymerizable monomer component, and may preferably have a number average molecular weight of 1000 to 50000, particularly 2000 to 20000, a hydroxyl value of 20 to 200 mgKOH/g, particularly 50 to 150 mgKOH/g, and an acid value of 3 to 100 mgKOH/g, particularly 20 to 70 mgKOH/g.

The hydroxyl group-containing polymerizable monomer is a compound having at least one hydroxyl group and polymerizable unsaturated bond respectively in one molecule, and may include, for example, monoester compounds of C₂₋₂₀ glycol with (meth)acrylic acid such as hydroxyethyl (meth)acrylate, hydroxypropyl (meth)acrylate, hydroxybutyl (meth)acrylate and the like, and the like. The acrylic monomer is a monoester compound of (meth)acrylic acid with C₁₋₂₂ monohydric alcohol, and may include, for example, methyl acrylate, methyl methacrylate, ethyl acrylate, ethyl methacrylate, propyl acrylate, propyl methacrylate, butyl acrylate, butyl methacrylate, hexyl acrylate, hexyl methacrylate, octyl acrylate, octyl methacrylate, lauryl acrylate, lauryl methacrylate, 2-ethylhexyl acrylate, 2-ethylhexyl methacrylate and the like.

The polyester resin and the acrylic resin in the water based coating composition of the present invention may be used in combination with an urethane-modified polyester resin and an urethane-modified acrylic resin prepared by subjecting a part of hydroxyl groups in the resins and a polyisocyanate compound to an urethanization reaction for chain-lengthening and forming high molecular weight resins respectively.

That is, the urethane-modified hydroxyl group-containing polyester resin is a high molecular weight resin prepared by subjecting a part of the hydroxyl groups in the hydroxyl group-containing polyester resin and the polyisocyanate compound to an urethanization reaction for chain lengthening.

The polyisocyanate compound may include, for example, aliphatic polyisocyanates such as hexamethylene diisocyanate, trimethylhexamethylene diisocyanate, dimer acid diisocyanate, lysine diisocyanate, and the like; biuret type ring adducts of the above polyisocyanate, isocyanuric type adducts, and the like; alicyclic diisocyanates such as isophorone diisocyanate, 4,4'-methylenebis(cyclohexylisocyanate), methylcyclohexane-2,4- (or -2,6-) diisocyanate, 1,3- (or 1,4-) di(isocyanatomethyl)cyclohexane, 1,4-cyclohexane diisocyanate, 1,3-cyclopentane diisocyanate, 1,2-cyclohexane diisocyanate and the like; biuret type adducts of the above polyisocyanate, isocyanuric ring type adducts; aromatic diisocyanate compounds such as xylylene diisocyanate, metaxylylene diisocyanate, tetramethylxylylene diisocyanate, tolylene diisocyanate, 4,4'-diphenylmethane diisocyanate, 1,5-naphthalene diisocyanate, 1,4-naphthalene diisocyanate, 4,4'-toluidine diisocyanate, 4,4'-diphenyl ether diisocyanate, (m- or p-) phenylene diisocyanate, 4,4'-biphenylene diisocyanate, 3,3'-dimethyl-4,4'-biphenylene diisocyanate, bis(4-isocyanatophenyl) sulfone, isopropylidenebis(4-phenylisocyanate) and the like; biuret type adducts of the above polyisocyanates, isocyanuric type ring adducts; polyisocyanates having at least three isocyanate groups in one molecule, for example, triphenylmethane-4,4'-4"-triisocyanate, 1,3,5-triisvcyanatobenzene, 2, 4, 6-triisocyanatotoluene, 4,4'-dimethyldiphenylmethane-2,2',5,5'-tetraisocyanate and the like; biuret type adducts of the above polyisocyanates, isocyanuric type ring adducts; urethanized adducts obtained by reacting a polyisocyanate compound with a polyol such as ethylene glycol, propylene glycol, 1,4-butylene glycol, dimethylolpropionic acid, polyalkylene glycol, trimethylolpropane, hexanetriol and the like in an excess amount of isocyanate group to hydroxyl group of the polyol; biuret type adducts of the above polyisocyanates, isocyanuric type ring adducts; and the like.

The curing agent (C) in the automobile body external panel-used water based coating composition may include a melamine resin, methylol amino resin, blocked polyisocyanate compound and the like.

The melamine may preferably include such a melamine that at least three methylol groups on an average per one triazine nucleus are methyl etherified, and a hydrophilic melamine which is such a melamine resin that a part of the methoxy group obtained as above is substituted with a monoalcohol having 2 or more carbon atoms, and which further has an imino group, an average degree of condensation of about 2 or less, and about 50% by weight of a melamine having one triazine nucleus. Trade names of melamine resins which satisfy the above conditions may include, for example, Cymel 202, Cymel 232, Cymel 235, Cymel 238, Cymel 254, Cymel 266, Cymel 267, Cymel 272, Cymel 285, Cymel 301, Cymel 303, Cymel 325, Cymel 327, Cymel 350, Cymel 370, Cymel 701, Cymel 703, Cymel 736, Cymel 738, Cymel 771, Cymel 1141, Cymel 1156, Cymel 1158 and the like (trade names, all marketed by Mitsui Cytec Ltd.); U-Van 120, U-Van 20HS, U-Van 2021, U-Van 2028, U-Van 2061 (trade names, all marketed by Mitsui Chemicals, Inc.); and Melan 522 (trade name, marketed by Hitachi Chemical Co., Ltd.).

The methylol amino resin is obtained by reacting melamine with an aldehyde. The aldehyde may include formaldehyde, paraformaldehyde, acetaldehyde, benzaldehyde and the like. The above melamine resin may also include ones obtained by etherifying a part or all of the methylol group in the methylol amino resin with a monoalcohol. The monoalcohol used in etherification may include methyl alcohol, ethyl alcohol, n-propyl alcohol, i-propyl alcohol, n-butyl alcohol, i-butyl alcohol, 2-ethyl butanol, 2-ethyl hexanol and the like.

The blocked polyisocyanate compound may be prepared by blocking the isocyanate group of the polyisocyanate having at least two free isocyanate groups in one molecule with a blocking agent respectively.

The polyisocyanate in the blocked polyisocyanate curing agent (C) may include, for example, aliphatic polyisocyanates such as hexamethylene diisocyanate, trimethylhexamethylene diisocyanate, dimer acid diisocyanate, lysine diisocyanate, and the like; biuret type adducts of the above polyisocyanate, isocyanuric ring type adducts, and the like; alicyclic diisocyanates such as isophorone diisocyanate, 4,4'-methylenebis(cyclohexylisocyanate), methylcyclohexane-2,4-(or -2,6-) diisocyanate, 1,3- (or 1,4-) di(isocyanatomethyl)cyclohexane, 1,4-cyclohexane diisocyanate, 1,3-cyclopentane diisocyanate, 1,2-cyclohexane diisocyanate and the like; biuret type adducts of the above polyisocyanate, isocyanuric ring type adducts; aromatic diisocyanate compounds such as xylylene diisocyanate, metaxylylene diisocyanate, tetramethylxylylene diisocyanate, tolylene diisocyanate, 4,4'-diphenylmethane diisocyanate, 1,5-naphthalene diisocyanate, 1,4-naphthalene diisocyanate, 4,4'-toluidine diisocyanate, 4,4'-diphenyl ether diisocyanate, (m-or p-) phenylene diisocyanate, 4,4'-biphenylene diisocyanate, 3,3'-dimethyl-4,4'-biphenylene diisocyanate, bis(4-isocyanatophenyl) sulfone, isopropylidenebis(4-phenylisocyanate) and the like; biuret type adducts of the above polyisocyanates, isocyanuric type ring adducts; polyisocyanates having at least three isocyanate groups in one molecule, for example, triphenylmethane-4,4'-4"-triisocyanate, 1,3,5-triisocyanatobenzene, 2,4,6-triisocyanatotoluene, 4,4'-dimethyldiphenylmethane-2,2',5,5'-tetraisocyanate and the like; biuret type adducts of the above polyisocyanates, isocyanuric type ring adducts; urethanized adducts obtained by reacting a polyisocyanate compound with a polyol such as ethylene glycol, propylene glycol, 1,4-butylene glycol, dimethylolpropionic acid, polyalkylene glycol, trimethylolpropane, hexanetriol and the like in an excess amount of isocyanate group to hydroxyl group of the polyol; biuret type adducts of the above polyisocyanates, isocyanuric type ring adducts; and the like.

Heating of the blocking agent used to block a free isocyanate group at 100°C or higher, preferably 130°C or higher makes it possible to easily react with hydroxyl group.

The blocking agent used in the curing agent (C) of the present invention may include, for example, phenols such as phenol, cresol, xylenol, nitrophenol, ethylphenol, hydroxydiphenyl, butylphenol, isopropylphenol, nonylphenol, octylphenol, methyl hydroxybenzoate, and the like; lactams such as s-caprolactam, δ-valerolactam, γ-butylolactam, β-propiolactam, and the like; aliphatic alcohols such as methanol, ethanol, propyl alcohol, butyl alcohol, amyl alcohol, lauryl alcohol and the like; ethers such as ethylene glycol monomethyl ether; ethylene glycol monoethyl ether, ethylene glycol monobutyl ether, diethylene glycol monomethyl ether, diethylene glycol monoethyl ether, propylene glycol monomethyl ether, methoxymethanol and the like; benzyl alcohol; glycolic acid; glycolates such as methyl glycolate, ethyl glycolate, butyl glycolate and the like; lactic acid, lactates such as methyl lactate, ethyl lactate, butyl lactate and the like; alcohols such as methylol urea, methylol melamine, diacetone alcohol, 2-hydroxyethyl acrylate, 2-hydroxyethyl methacrylate and the like; oximes such as formamideoxime, acetamideoxime, acetoxime, methylethylketooxime, diacetylmonooxime, benzophenoneoxime, cyclohexaneoxime and the like; active methylenes such as dimethyl malonate, diethyl malonate, ethyl acetoacetate, methyl acetoacetate, acetylacetone and the like; mercaptans such as butylmercaptan, t-butylmercaptan, hexylmercaptan, t-dodecylmercaptan, 2-mercaptobenzothiazole, thiophenol, methylthiophenyl, ethylthiophenyl and the like; acid amides such as acetanilide, acetanisizide, acetotoluide, acrylamide, methacrylamide, acetic acid amide, stearic acid amide, benzamide and the like; imides such as succinic acid imide, phthalic acid imide, maleic acid imide and the like; amines such as diphenylamine, phenylnaphthylamine, xylidine, N-phenylxylidine, carbazole, aniline, naphthylamine, butylamine, dibutylamine, butylphenylamine and the like; imidazoles such as imidazole, 2-ethylimidazole and the like; pyrazoles such as 3,5-dimethylpyrazole and the like; ureas such as urea, thiourea, ethyleneurea, ethylenethiourea, diphenylurea and the like; carbamates such as phenyl N-phenylcarbamate and the like; imines such as ethyleneimine, propyleneimine and the like; sulfites such as sodium bisulfite, potassium bisulfite; and the like.

Other blocking agent used in the curing agent (C) of the present invention may include, for example, 3,5-dimethylpyrazole, 3-methylpyrazole, 4-nitro-3,5-dimethylpyrazole, 4-bromo-3,5-dimethylpyrazole and the like. Of these, 3,5-dimethylpyrazole is preferable.

The blocking agent for blocking isocyanate group of the polyisocyanate in the curing agent (C) may also include a hydroxycarboxylic acid having at least one hydroxyl group and at least one carboxyl group, for example, hydroxypivalic acid, dimethylol propionic acid and the like. The curing agent (C) may also include a blocked polyisocyanate compound which is made water-dispersible by neutralizing carboxyl group of hydroxycarboxylic acids. Trade names thereof may include, for example, Bayhydrol VPLS2310 (trade name, marketed by Sumika Bayel Urethane Co., Ltd.) and the like.

The automobile body external panel-used water based coating composition of the present invention may contain a pigment (D) such as a color pigment, metallic pigment, extender pigment and the like. The color pigment may include an inorganic pigment such as titanium oxide, zinc oxide, carbon black, cadmium red, molybdenum red, chrome yellow, Prussian blue, cobalt blue and the like; and an organic pigment such as azo pigment, phthalocyanine pigment, quinacridone pigment, isoindolin pigment, threne pigment, perylene pigment and the like. The metallic pigment may include, for example, a scaly aluminum, mica, metallic oxide-coated mica, mica-shaped iron oxide and the like. The extender pigment may include, for example, clay, baryta, settling barium sulfate, barium carbonate, calcium carbonate, silica, white carbon, diatomaceous earth, magnesium carbonate, talc, aluminum flake, mica flake, and the like.

A mixing amount of the pigment (D) may optionally be selected depending on uses, and may suitably be in the range of less than 200 parts by weight, preferably 10 to 150 parts by weight, more preferably 50 to 100 parts by weight per 100 parts by weight of a total solid content of the resin particle (A) containing the olefin polymer and acrylic polymer in the same particle, the hydroxyl group-containing resin (B) and the curing agent (C).

Of the pigment (D), use of the talc in an amount of less than 50 parts by weight, preferably 5-40 parts by weight, more preferably 10 to 30 parts by weight may preferably improve anti-chipping properties and finish properties.

The automobile body external panel-used water based coating composition of the present invention may preferably contain an urethane emulsion (E) for the purpose of improving anti-chipping properties.

The urethane emulsion (E) is an emulsion obtained by use of a reaction product of an aliphatic and/or alicyclic diisocyanate, at least one diol selected from polyether diol, polyester diol and polycarbonate diol having a number average molecular weight of 500 to 5,000, a low molecular weight polyhydroxy compound and a dimethylol alkane acid, specifically is a self-emulsifiable urethane emulsion having a mean particle size of 0.001 to 3 µm and prepared by a method which comprises polymerizing the aliphatic and/or alicyclic diisocyanate, at least one diol selected from polyether diol, polyester diol and polycarbonate diol having the number average molecular weight of 500 to 5,000, the low molecular weight polyhydroxy compound and the dimethylol alkane acid in the presence of a hydrophilic organic solvent not having an active hydrogen reactable with isocyanate group in the molecule at a NCO to OH equivalent ratio of 1.1 to 1.9 by a one shot method or a multi-stage method to obtain an urethane prepolymer, followed by neutralizing the prepolymer with a tertiary amine and mixing with water to take place a water-lengthening reaction, or followed by mixing with water to take place a water-lengthening reaction, while neutralizing the prepolymer with a tertiary amine, emulsifying and dispersing into water, and by optionally distilling off the organic solvent.

Examples of trade names for the urethane emulsion may include U Coat UX-497, U Coat UX4300, U Coat UX5000, U Coat UX8100 (trade names, all marketed by Sanyo Chemical Industries, Ltd.), Neo Rez R-940, R-941, R-960, R-962, R-966, R-967, R-962, R-9603, R-9637, R-9618, R-9619, XR-9624, Vondic 1310NSC (trade names, all marketed by Imperial Chemical Industries PLC), Hydran HW-310, HW-311, HW-312B, HW-301, HW-111, HW-140, HW-333, HW-340, HW-350, HW-910, HW-920, HW-930, HW-935, HW-940, HW-960, HW-970, HW-980, AP-10, AP-20, AP-30, AP-40, AP-60, AP-70, AP-60LM and the like (trade names, all marketed by Dainippon Ink & Chemicals Inc.), and the like.

A mixing amount of the urethane emulsion (E) is in the range of 1 to 30 parts by weight per 100 parts by weight of a total solid content of the resin particle (A) containing the olefin polymer and acrylic polymer in the same particle, the hydroxyl group-containing resin (B) and the curing agent (C).

The automobile body external panel-used water based intercoat coating composition of the present invention may be made water-dispersible by neutralizing the carboxyl group in the hydroxyl group-containing resin (B) and the curing agent (C) with a neutralizing agent.

The neutralizing agent may include, for example, hydroxides of alkali metal or alkaline earth metal such as sodium hydroxide, potassium hydroxide, lithium hydroxide, calcium hydroxide, barium hydroxide and the like; ammonia; a primary monoamine such as ethylamine, propylamine, butylamine, benzylamine, monoethanolamine, neopentanolamine, 2-aminopropanol, 3-aminopropanol and the like; a secondary monoamine such as diethylamine, diethanolamine, di-n- or di-iso-propanolamine, N-methylethanolamine, N-ethylethanolamine and the like; a tertiary monoamine such as dimethylethanolamine, trimethylamine, triethylamine, triisopropylamine, methyldiethanolamine, dimethylaminoethanol and the like; a polyamine such as diethylenetriamine, hydroxyethylaminoethylamine, ethylaminoethylamine, methylaminopropylamine and the like; and the like.

The water based coating composition of the present invention may optionally contain dispersant, anti-settling agent, organic solvent, urethane-forming reaction-promoting catalyst such as an organotin compound, hydroxy group-melamine resin crosslinking reaction-promoting catalyst such as an acid catalyst, anti-foaming agent, thickening agent, anti-corrosive agent, ultraviolet light absorbent, surface controlling agent and the like.

Coating of the automobile body external panel-used water based coating composition may be carried out by the known coating methods, for example, spray coating, air spray coating, airless spray coating, electrostatic coating and the like, so as to form a coating film having a thickness in the range of 3 to 100 µm, particularly 5 to 60 µm as a cured coating film. The resulting coating film may be heated at 120 to 170°C, particularly 130 to 150°C for 10 to 40 minutes so as to be crosslinked and cured.

The coating film formed from the water based coating composition of the present invention shows good anti-chipping properties, and may be used as an anti-chipping primer, but preferably be used in the method of forming a multi-layer coating film onto the automobile body external panel according to the following steps 1 to 3.

Step 1 in the multi-layer film-forming method of the present invention is a step of coating the automobile body external panel-used water based coating composition without coating an anti-chipping primer onto a coating substrate consisting of a metal coating substrate or an electrodeposition coating-treated metal coating substrate, followed by heat curing at 120 to 170°C, particularly 130 to 150°C for 10 to 40 minutes to form a cured coating film, or forming an uncured coating film as it is.

In the above case, the use of a coating substrate consisting of a composite member of an electrodeposition coating-treated metal member and plastic member makes it possible to coat both metal member and plastic member simultaneously by use of the water based coating composition of the present invention, resulting in providing such effects that a coating color of the metal member coincides with that of the plastic member, and that a coating film showing good anti-chipping properties can be formed on both members.

Step 2 is a step of coating a topcoat composition by at least one layer onto a coating film formed in step 1 to form a topcoat coating film.

In the above case, at least one topcoat coating composition selected from a solid color coating composition, metallic coating composition, light-coherent coating composition and clear coating composition may be coated by at least one layer to form a topcoat coating film consisting of at least one layer.

Step 3 is a step of heat curing at about 60 to 180°C for about 10 to 90 minutes at least one uncured coating film formed in steps 1 and 2.

A multi-layer coating film may be formed by a 3 coat · 1 bake coating method (3C1B), 3 coat · 2 bake coating method (3C2B) or 3 coat · 3 bake coating method (3C3B) including the automobile body external panel-used water based coating composition of the present invention.

The present invention can provide the following particular effects.

The use of the automobile body external panel-used water based coating composition makes possible recycling and reduction in loadings to environment, and makes it possible to obtain a multi-layer coating film showing good properties in anti-chipping properties and finish properties.

The use of the water based coating composition of the present invention makes possible omission of the anti-chipping primer usually coated onto the electrodeposition coating film, resulting in shortening of coating steps.

Simultaneous coating of the water based coating composition of the present invention onto the composite coating substrate obtained by integrating a plastic member into a metal member after electrodeposition coating makes it possible to coincide a coating color of the metal member with that of the plastic member, and to form a multi-layer coating film showing good properties in anti-chipping properties and finish properties on both members.

### Example

The present invention is explained more in detail by reference to the following Examples. The present invention is not to be limited thereto. Hereinafter, "parts" and "%" represent "part by weight" and "% by weight" respectively.

### Preparation Example 1

### Preparation of Resin Particle (A-1)

A pressurized kneader was charged with 100 parts of ethylene · 1-butene copolymer as an olefin polymer, 10 parts of maleic anhydride graft polyethylene to act as a dispersant by a basic substance and 5 parts of oleic acid, followed by kneading at 140°C for 30 minutes, charging under pressure in five minutes 20 parts of an alkali water prepared by dissolving potassium hydroxide as a basic substance in an amount necessary to neutralize a total carboxylic acid in the maleic anhydride graft polyethylene and oleic acid by use of a pump connected with the kneader, keeping kneading for 30 minutes after the pressure of the kneader reached 3 kg/cm²G, cooling the kneader down to 60°C to taking out a resulting product as a white solid, mixing 10 parts of the white solid with 20 parts of water, stirring with a turbine impeller miner, filtering through a 100 mesh metal gauze with no residue to obtain an olefin emulsion having a solid content of 50%.

Next, a reactor was charged with 140 parts of the olefin emulsion and 152 parts of deionized water, followed by heating up to 80°C under nitrogen atmosphere.

Separately, a mixture of 12 parts of styrene, 15 parts of 2-ethylhexyl acrylate and 0.3 part of benzoyl peroxide was added to 12 parts of deionized water and emulsified by use of 0.12 part of sodium dodecylbenzene sulfonate to obtain an emulsified mixture, followed by dropping the emulsified mixture into the above reactor containing the olefin emulsion over 3 hours, and keeping at that temperature for 4 hours to complete polymerization and to obtain resin particle (A-1) having a solid content of 30%.

### Preparation Example 2

### Preparation of Resin Particle (A-2)

A reactor was charged with 100 parts of the olefin emulsion obtained in Preparation Example 1 and 165 parts of deionized water, followed by heating up to 80°C under nitrogen atmosphere. Separately, a mixture of 25 parts of styrene, 25 parts of 2-ethylhexyl acrylate and 0.5 part of benzoyl peroxide was added to 20 parts of deionized water and emulsified by use of 0.2 part of sodium dodecylbenzene sulfonate to obtain an emulsified mixture, followed by dropping the emulsified mixture into the above reactor containing the olefin emulsion over 3 hours, and keeping at that temperature for 4 hours to complete polymerization and to obtain resin particle (A-2) having a solid content of 30%.

### Preparation Example 3

### Preparation of Urethane Emulsion (E)

A pressurized polymerizer equipped with a thermometer and stirrer was charged with 173.9 parts of polyethylene adipate diol (number average molecular weight 2000), 6.6 parts of trimethylolpropane, 47.6 parts of dimethylol propionic acid, 171.9 parts of isophorone diisocyanate (IPDI) and 400 parts of acetone, followed by purging with nitrogen gas, reacting at 80°C for 7 hours with agitation to obtain an acetone solution of an NCO terminated urethane prepolymer having an NCO % content of 2.65%, cooling the acetone solution down to 30°C, adding 35.9 parts of triethylamine, adding a solution obtained by dissolving 200 parts of diethanolamine into 780 parts of water to the acetone solution, distilling off acetone at 50 to 60°C under vacuum to obtain a water based urethane resin emulsion (E-1) having a solid content of 40.0%.

### Preparation Example 4

### Preparation of Polyester Resin (B-1)

A four-necked flask equipped with a heater, stirrer, thermometer, reflux condenser and water separator was charged with the following monomer mixture and heated, heating the resulting content from 160°C to 230°C over 3 hours, keeping at 230°C for one hour, distilling off a formed condensation water by use of a fractionating column, adding 15.0 parts of anhydrous trimellitic acid to the resulting product, desolvating, neutralizing with dimethylethanolamine, and mixing with water to obtain polyester resin (B-1) having a solid content of 40%, hydroxyl value of 150 mgKOH/g, acid value of 35 mgKOH/g and a number average molecular weight of 2,000.

**Monomer mixture:**

| | |
|---|---|
| 1,4-cyclohexane dimethanol | 44.6 parts |
| trimethylolpropane | 62.8 parts |
| neopentyl glycol | 24.2 parts |
| 1,4-cyclohexane carboxylic acid | 61.9 parts |
| a dipic acid | 70.1 parts |

### Preparation Example 5

### Preparation of Polyester Resin (B-2)

Procedures of Preparation Example 4 were duplicated except that the formulation shown in Table 1 was used to obtain polyester resin (B-2) having a solid content of 40%, hydroxyl value of 140 mgKOH/g, acid value of 35 mgKOH/g and a number average molecular weight of 2,000.

**Table 1**

| | Preparation Example 4 | Preparation Example 5 |
|---|---|---|
| Polyester resin | B-1 | B-2 |
| 1,4-cyclohexane dimethanol | 44-6 | |
| Trimethylolpropane | 62.8 | 54.6 |
| Butylethylpxopane diol | | 64 |
| Neopentylglycol | 24.2 | 21 |
| 1,4-cyclohexane dicarboxylic acid | 61.9 | |
| Isophthalic acid | | 77 |
| Adipic acid | 70.1 | 43.8 |
| Anhydrous trimellitic acid | 15 | 15.3 |

### Example 1

### (Preparation of Water Based Coating Composition No. 1)

A mixture of 40 parts of resin particle (A-1), 30 parts of polyester resin (B-1), 20 parts (solid content) of Bayhydrol VP LS 2310 (Note 2), 10 parts of Cymel 325 (Note 3), one part of Carbon MA100 (Note 4), 70 parts of JR-806 (Note 5) and 10 parts of MICRO ACE S-3 (Note 6) was dispersed, followed by adding deionized water and controlling viscosity at Ford cup No. 4 20°C 40 sec. to obtain water based coating composition No. 1 of Example 1.

### Examples 2-5

Example 1 was duplicated except that formulations shown in Table 2 were used respectively to obtain water based coating compositions No. 2 to No. 5 respectively.

### Comparative Example 1

### (Preparation of Water Based Coating Composition No. 6)

A mixture of 40 parts of resin particle (A-1), 20 parts (solid content) of Bayhydrol VP LS 2310 (Note 2), 10 parts of Cymel 325 (Note 3), one part of Carbon MA100 (Note 4), 70 parts of JR-806 (Note 5) and 10 parts of MICRO ACE S-3 (Note 6) was dispersed, followed by adding deionized water and controlling viscosity at Ford cup No. 4 20°C 40 sec. to obtain water based coating composition No. 6 of Comparative Example 1.

### Comparative Examples 2 and 3

Comparative Example 1 was duplicated except that formulations shown in Table 2 were used respectively to obtain water based coating compositions No. 7 to No. 8 respectively.

### Comparative Examples 2 and 3 respectively.

**Table 2**

| | | Example | | | | | Comparative Example | | |
|---|---|---|---|---|---|---|---|---|---|
| | | 1 | 2 | 3 | 4 | 5 | 1 | 2 | 3 |
| Water based coating composition No. | | 1 | 2 | 3 | 4 | 5 | 6 | 7 | 8 |
| Resin particle (A) | resin particle (A-1) | 40 | | 30 | 40 | | | 15 | |
| | resin particle (A-2) | | 40 | | | 30 | | | 90 |
| Urethane Emulsion (E) | U Coat UX 8100 (Note 1) | | | 10 | | | | | |
| | urethane emulsion (E-1) | | | | | 10 | | | |
| Hydroxyl group-containing resin (B) | polyester resin (B-1) | 30 | 30 | 30 | | 30 | 70 | 55 | 10 |
| | polyester resin (B-2) | | | | 30 | | | | |
| Curing agent (C) | Bayhydrol VP LS2310 (Note 2) | 20 | 20 | 20 | 20 | 20 | 20 | 20 | |
| | Cymel 325 (Note 3) | 10 | 10 | 10 | 10 | 10 | 10 | 10 | |
| Pigment (D) | carbon MA 100 (Note 4) | 1 | 1 | 1 | 1 | 1 | 1 | 1 | 1 |
| | JR806 (Note 5) | 70 | 70 | 70 | 70 | 70 | 70 | 70 | 70 |
| | MICRO ACE S-3 (Note 6) | 10 | 10 | 10 | 10 | 10 | 10 | 10 | 10 |
| (amounts in solid content) | | | | | | | | | |

| | | | | | | | | | |
|---|---|---|---|---|---|---|---|---|---|
| (Note 1) U Coat UX-8100: trade name, marketed by Sanyo Chemical Industries, Ltd., urethane emulsion. (note 2) Bayhydrol VP LS2310: trade name, marketed by Sumika Bayel Urethane Co., Ltd., blocked polyisocyanate. (Note 3) Cymel 325: trade name, marketed by Mitsui Cytec Ltd., imino group-containing melamine resin. (Note 4) Carbon MA 100: trade name, marketed by Mitsubishi Chemical corporation, carbon black. (Note 5) JR 806: trade name, marketed by Tayka Corporation, titanium white. (Note 6) MICRO ACE S-3: trade name, marketed by Nippon Talc Co., Ltd., talc. | | | | | | | | | |

### Preparation of test panel:

Elecron GT-10LF (trade name; marketed by Kansai Paint Co., Ltd., cationic electrodeposition coating composition) was coated onto a galvanized sheet treated with Palbond #3020 (trade name, marketed by Nippon Parkerizing Co., Ltd., zinc phosphate treatment) by electrodeposition coating to obtain a test panel having a coating film of 20 µm.

### Example 6

The water based coating composition No. 1 was coated onto the test panel by 30 µm, followed by heat curing at 140°C for 30 minutes to form a cured coating film, coating Magicron TB-515 (trade name, marketed by Kansai Paint Co., Ltd., acryl·melamine resin based coating composition) thereonto to be a coating film thickness of 15 µm, leaving to stand at room temperature for 3 minutes to form an uncured coating film, coating a clear coating composition (Magicron TC-71, trade name, marketed by Kansai Paint Co., Ltd., acryl•melamine resin based coating composition) onto the uncured coating film to be a coating film thickness of 35 µm, and heat curing at 140°C for 30 minutes to obtain a multi-layer coating film.

### Examples 7-10

Example 1 was duplicated except that water based coating composition No. 2 to No. 5 were used in place of water based coating composition No. 1 of Example 1 to obtain multi-layer coating films respectively.

### Comparative Example 4

The water based coating composition No. 6 was coated onto the test panel by 30 µm, followed by heat curing at 140°C for 30 minutes to obtain a cured coating film, coating Magicron TB-515 (trade name, marketed by Kansai Paint Co., Ltd., acryl•melamine resin based coating composition) to be a coating film thickness of 15 µm, leaving to stand at room temperature for 3 minutes to form an uncured coating film, coating a clear coating composition (Magicron TC-71, trade name, marketed by Kansai Paint Co., Ltd., acryl-melamine resin based coating composition) onto the uncured coating film to be a coating film thickness, of 35 µm and heat curing at 140°C for 30 minutes to obtain a multi-layer coating film. Comparative Examples 5-6

The water based coating composition Nos. 7-8 were coated onto the test panel by 30 µm, followed by heat curing at 140°C for 30 minutes to obtain a cured coating film, coating Magicron TB-515 (trade name, marketed by Kansai Paint Co., Ltd., acryl-melamine resin based coating composition) to be a coating film thickness of 15 µm, leaving to stand at room temperature for 3 minutes to form an uncured coating film, coating a clear coating composition (Magicron TC-71, trade name, marketed by Kansai Paint Co., Ltd., acryl·melamine resin based coating composition) onto the uncured coating film to be a coating film thickness of 35 µm and heat curing at 140°C for 30 minutes to obtain a multi-layer coating film respectively.

### Comparative Example 7

TP-7A Primer (trade name, marketed by Kansai Paint Co., Ltd., olefin based coating composition, anti-chipping coat) was coated onto the test panel by 2 µm, followed by leaving to stand at room temperature for 3 minutes, coating water based coating composition No. 6 by 30 µm, and heat curing at 140°C for 30 minutes to obtain a cured coating film, coating Magicron TB-515 (trade name, marketed by Kansai Paint Co., Ltd., acryl-melamine resin based coating composition) thereonto to be a coating film thickness of 15 µm, leaving to stand at room temperature for 3 minutes to form an uncured coating film, coating a clear coating composition (Magicron TC-71, trade name, marketed by Kansai Paint Co., Ltd., acryl·melamine resin based coating composition) onto the uncured coating film to be a coating film thickness of 35 µm, and heat curing at 140°C for 30 minutes to obtain a multi-layer coating film.

Test results of the multi-layer coating films obtained as above are shown in Table 3.

**Table 3**

| | | Example 6 | Example 7 | Example 8 | Example 9 | Example 10 | Comparative Example 4 | Comparative Example 5 | Comparative Example 6 | Comparative Example 7 |
|---|---|---|---|---|---|---|---|---|---|---|
| TP-7A Primer | | | | | | | | | | used |
| Mater based coating composition No. | | 1 | 2 | 3 | 4 | 5 | 6 | 7 | 8 | 6 |
| Topcoat coating composition | | used | used | used | used | used | used | used | used | used |
| Coating film appearance | smoothness (Note 7) | ○ | ○ | ○ | ○ | ○ | ○ | ○ | △ | × |
| | adhesion properties (Note 8) | ○ | ○ | ○ | ○ | ○ | ○ | ○ | △ | ○ |
| Coating film performance | water resistance (Note 9) | ○ | ○ | ○ | ○ | ○ | ○ | ○ | × | △ |
| | anti-chipping properties (Note 10) | ⓪ | ⓪ | ⓪ | ⓪ | ⓪ | × | △ | ○ | ⓪ |

| | | | | | | | | | | |
|---|---|---|---|---|---|---|---|---|---|---|
| (Note 7) Smoothnesse: Smoothness of the test panel was visually evaluated as follows. ○: Good properties in smoothness, gloss and definition properties. △: Slightly poor in smoothness, gloss and definition properties. ×: Seriously poor in smoothness, gloss and definition properties. (Note 8) Adhesion properties: 100 cross cut 2 mm × 2 mm squares reaching the substrate were formed in the coating film, followed by adhering an adhesive cellophane tape on the surface of the squares, strongly peeling the tape at 20°C to examine a number of squares remaining without being peeled off, and evaluating as follows. ○: remaining squares 100, △: remaining squares 99-95, ×: remaining squares 94 or less. (Note 9) Water resistance: After dipping test panel 1 into a hot water at 40°C for 10 days, 100 cross cut 2 mm × 2 mm squares were formed in the multi-layer coating film, followed by adhering an adhesive cellophane tape on the surface of the squares, strongly peeling the tape to examine a number of squares remaining without being peeled off, and evaluating as follows. ○: No blisters developed, and remaining squares 100, △: some blisters developed, and remaining squares 90-99, ×: blisters remarkably developed, and remaining squares less than 90. (Note 10) Anti-chipping properties: A test panel 1 having the multi-layer coating film was mounted on a test panel holder of a JA-400 type rebounding gravels test instrument marketed by Saga test instruments Co., Ltd. (chipping test apparatus), followed by spraying 50 g of granite gravels having a particle size of No. 7 onto the surface of a coating film under an air pressure of 0.294 MPa (3 kgf/cm²) at -20°C, and visually evaluating degree of development of mars on the coating film as follows. ⓪: Size of the mar is considerably small and the topcoat coating film is slightly marred, ○: Size of the mar is small and the water based coating film of the present invention is exposed, △: size of the mar is small, but steel sheet substrate is exposed, ×: size of the mar is considerably large, and the steel sheet substrate is largely exposed. | | | | | | | | | | |

## Claims

1. A water-based coating composition containing (A) a resin particle containing an olefin polymer and an acrylic polymer in the same particle, (B) a hydroxyl group-containing resin, (C) a curing agent, and (D) a pigment, the weight ratio of the olefin polymer to the acrylic polymer being such that the olefin polymer is 95 to 10% by weight and the acrylic polymer is 5 to 90% by weight, the mean particle size of the resin particle (A) being 10 nm to 500 µm, and the mixing amount of the resin particle (A) in the water based coating composition being 20 to 80 parts by weight per 100 parts by weight of the resin particle (A), the hydroxyl group-containing resin (B) and the curing agent (C).

2. A water based coating composition as claimed in claim 1 wherein the pigment (D) is in an amount less than 200 parts by weight per 100 parts by weight of a total solid content of the resin particle (A), the hydroxyl group-containing resin (B) and the curing agent (C).

3. A water based coating composition as claimed in claim 1 or claim 2 wherein talc is contained in an amount less than 50 parts by weight per 100 parts by weight of the total solid content of the resin particle (A), the hydroxyl group-containing resin (B) and the curing agent (C).

4. A water based coating composition as claimed in any one of claims 1 to 3, wherein a urethane emulsion (E) is contained in an amount in the range of 1 to 30 parts by weight per 100 parts by weight of the total solid content of the resin particle (A), the hydroxyl group-containing resin (B) and the curing agent (C).

5. A multi-layer coating film-forming method, which method comprises the following successive steps,
step 1 of coating a water based coating composition as claimed in any one of claims 1 to 4, without coating an anti-chipping primer, onto a coating substrate consisting of a metal coating substrate or an electrodeposition coating-treated metal coating substrate, followed by heat curing to form a cured coating film or forming an uncured coating film as it is,
step 2 of coating at least one layer of a topcoat coating composition onto a coating film formed in step 1 to form a topcoat coating film, and
step 3 of heat curing at least one uncured coating film formed in steps 1 and 2 at 60 to 180°C for from 10 to 90 minutes.

6. A multi-layer coating film-forming method as claimed in claim 5, wherein the coating substrate is a composite member of an electrodeposition coating-treated metal member with a plastic member.

7. A method according to claim 5 or claim 6 wherein the substrate is an automobile body external panel.

8. An automobile body external panel which has a coating formed from the coating composition of any of claims 1-4.

## Patentansprüche

1. Beschichtungszusammensetzung auf Wasserbasis, die (A) ein Harzteilchen, das ein Olefinpolymer und ein Acrylpolymer im selben Teilchen enthält, (B) ein Hydroxylgruppen enthaltendes Harz, (C) einen Härter und (D) ein Pigment enthält, wobei das Gewichtsverhältnis zwischen Olefinpolymer und Acrylpolymer so gewählt ist, dass das Olefinpolymer 95 bis 10 Gew.-% und das Acrylpolymer 5 bis 90 Gew.-% ausmacht, die mittlere Teilchengröße des Harzteilchens (A) 10 nm bis 500 µm beträgt und die in die Beschichtungszusammensetzung auf Wasserbasis eingemischte Menge des Harzteilchens (A) 20 bis 80 Gewichtsteile pro 100 Gewichtsteile von Harzteilchen (A), Hydroxylgruppen enthaltendem Harz (B) und Härter (C) beträgt.

2. Beschichtungszusammensetzung auf Wasserbasis nach Anspruch 1, worin das Pigment (D) in einer Menge von weniger als 200 Gewichtsteilen pro 100 Gewichtsteile des gesamten Feststoffgehalts von Harzteilchen (A), Hydroxylgruppen enthaltendem Harz (B) und Härter (C) enthalten ist.

3. Beschichtungszusammensetzung auf Wasserbasis nach Anspruch 1 oder 2, worin Talk in einer Menge von weniger als 50 Gewichtsteilen pro 100 Gewichtsteile des gesamten Feststoffgehalts von Harzteilchen (A), Hydroxylgruppen enthaltendem Harz (B) und Härter (C) enthalten ist.

4. Beschichtungszusammensetzung auf Wasserbasis nach einem der Ansprüche 1 bis 3, worin eine Urethanemulsion (E) in einer Menge im Bereich von 1 bis 30 Gewichtsteilen pro 100 Gewichtsteile des gesamten Feststoffgehalts von Harzteilchen (A), Hydroxylgruppen enthaltendem Harz (B) und Härter (C) enthalten ist.

5. Mehrfachbeschichtungs-Filmbildungsverfahren, wobei das Verfahren folgende aufeinander folgende Schritte umfasst:
Schritt 1: Auftragen einer Zusammensetzung auf Wasserbasis nach einem der Ansprüche 1 bis 4, ohne Auftragen eines Absplitterungen verhindernden Primers, auf ein Beschichtungssubstrat, das aus einem Metallbeschichtungssubstrat oder einem durch Elektroplattierung behandelten Metallbeschichtungssubstrat besteht, gefolgt von Heißhärtung zur Bildung eines gehärteten Beschichtungsfilms oder von der Bildung eines unveränderten, ungehärteten Beschichtungsfilms,
Schritt 2: Auftragen zumindest einer Schicht einer Deckschicht-Beschichtungszusammensetzung auf einen in Schritt 1 gebildeten Beschichtungsfilm, um eine Deckschicht zu bilden, und
Schritt 3: Heißhärten zumindest eines in Schritt 1 oder 2 gebildeten ungehärteten Beschichtungsfilms bei 60 bis 180 °C für 10 bis 90 Minuten.

6. Mehrfachbeschichtungs-Filmbildungsverfahren nach Anspruch 5, worin das Beschichtungssubstrat ein Verbundelement aus einem durch Elektroplattierung behandelten Metallelement und einem Kunststoffelement ist.

7. Verfahren nach Anspruch 5 oder 6, worin das Substrat eine Außenwand einer Kraftfahrzeugkarosserie ist.

8. Außenwand einer Kraftfahrzeugkarosserie, die eine aus einer Beschichtungszusammensetzung nach einem der Ansprüche 1 bis 4 gebildete Beschichtung aufweist.

## Revendications

1. Composition de revêtement de base aqueuse contenant (A) une particule de résine contenant un polymère oléfinique et un polymère acrylique dans la même particule, (B) une résine contenant un groupe hydroxyle, (C) un agent durcissant et (D) un pigment, le rapport en poids du polymère oléfinique au polymère acrylique étant tel que le polymère oléfinique représente 95 à 10% en poids et le polymère acrylique représente 5 à 90% en poids, la dimension moyenne des particules de la particule de résine (A) étant de 10nm à 500 µm, et la quantité de mélange de la particule de résine (A) dans la composition de revêtement à base d'eau étant de 20 à 80 parties en poids pour cent parties en poids de la particule de résine (A), de la résine contenant un groupe hydroxyle (B) et de l'agent durcissant (C).

2. Composition de revêtement à base d'eau selon la revendication 1 où le pigment (D) est en une quantité inférieure à 200 partes en poids pour 100 parties en poids d'une teneur totale en solides de la particule de résine (A), de la résine contenant un groupe hydroxyle (b) et de l'agent durcissant (C).

3. Composition de revêtement à base d'eau selon la revendication 1 où la revendication 2, où du talc est contenu en une quantité inférieure 50 parties en poids pour 100 parties en poids de la teneur totale en solides de la particule de la résine (A), de la résine contenant un groupe hydroxyle (B) et de l'agent durcissant (C).

4. Composition de revêtement à base d'eau selon une quelconque revendication 1 à 3 où une émulsion d'uréthanne (E) est contenue en une quantité dans la gamme de 1 à 30 parties en poids pour 100 parties en poids de la teneur totale en solides de la particule de résine (A), de la résine contenant un groupe hydroxyle (B) et de l'agent durcissant (C).

5. Méthode de formation d'un film de revêtement multi-couche laquelle méthode comprend les étapes successives suivantes,
étape 1 de revêtement d'une composition de revêtement à base d'eau selon l'une quelconque revendication 1 à 4, sans revêtement d'un apprêt anti -écaillement, sur un substrat de revêtement consistant en un substrat de revêtement de métal ou un substrat de revêtement de métal traité par un revêtement d'éléctrodéposition, avec ensuite durcissement à la chaleur pour former un film de revêtement durci ou former un film de revêtement non durci tel quel,
étape 2 de revêtement d'au moins une couche d'une composition d'un revêtement de couche supérieure sur un film de revêtement formé à l'étape 1 pour former un film de revêtement de couche supérieure et
étape 3 de durci ssement à la chaleur d'au moins un film de revêtement non durci formé aux étapes 1 et 2 à 60 à 180°C pendant 10 à 90 minutes.

6. Méthode de formation d'un film de revêtement multi-couche selon la revendication 5 où le substrat de revêtement est un élément composite d'un élément de métal traité par un revêtement d'éléctrodéposition avec un élément en plastique.

7. Méthode selon la revendication 5 pour la revendication 6 où le substrat est un panneau externe de carrosserie d'automobile.

8. Panneau externe de carrosserie d'automobile qui a un revêtement formé de la composition de revêtement de l'une quelconque des revendications 1-4.
